# DEMANDE DE BREVET EUROPEEN

(11) **EP 0 936 017 A2**
(43) Date de publication de la demande: **18.08.1999**
(21) Numéro de dépôt: 99500021.3
(22) Date de dépôt: 09.02.1999
(51) Int. Cl.: B23H 7/02

(54) **Dispositif d'échantéité pour le bras inférieur d'une machine à usiner par électroérosion**

(30) Priorité: 11.02.1998 ES 9800265
(71) Demandeur: Ona Electro-Erosion, S.A., 48200 Durango (Vizcaya) (ES)
(72) Inventeur: Maidagan Larrumbide, Javier, 48200 Durango (Vizcaya) (ES)
(74) Mandataire: Urizar Barandiaran, Miguel Angel

(57) **Abrégé**

Dispositif d'étanchéité pour bras inférieur d'une machine à usiner par électroérosion, se composant d'un réservoir de travail conteneur de fluide avec une fenêtre dans l'une de ses parois latérales qui permet le passage dudit bras, en ajoutant à l'extérieur du réservoir, de chaque côté de ladite fenêtre, un dispositif d'enroulement d'une bande métallique étirée face à la fenêtre, un encadrement structurel relié au réservoir encadrant la fenêtre qui se compose d'un cadre intérieur et d'un cadre extérieur lesquels emprisonnent entre l'un et l'autre un encadrement d'étanchéité constitué par deux semi-cadres se faisant vis-à-vis qui disposent chacun sur ses bords d'un bourrelet en caoutchouc qui s'appuie sur la bande métallique et d'un joint de semi-étanchéité disposé autour de l'orifice de la bande métallique et d'un conduit de trop-plein disposé inférieurement au moins tout au long de la fenêtre du réservoir de travail.

Pour application sur machines à usiner par électroérosion.

## Description

Sur nombre de machines à usiner par électroérosion il est nécessaire que le réservoir de travail qui contient un liquide de travail pour l'électroérosion soit pourvu sur une de ses parois latérales d'une fenêtre par laquelle puisse pénétrer le bras inférieur de la machine.

Il faut éviter que le liquide du réservoir ne s'écoule à l'extérieur par ladite fenêtre, ce qui a poussé à imaginer une foule de dispositifs, dont celui que décrit le Brevet U.S.A. 4.647.747 dans lequel est disposée une lame métallique près de ladite fenêtre et autres joints d'étanchéité entre ladite lame et le bras inférieur.

Il convient de signaler que le problème de l'étanchéité se complique du besoin de ne pas transmettre au bras inférieur d'efforts qui supposeraient la plus minime déformation et qui, transmis à sa poupée, donneraient lieu à un travail imprécis, alors qu'il est unanimement reconnu que l'on a besoin de la plus grande précision lors de l'usinage par électroérosion.

La solution fournie par le Brevet U.S.A. 4.647.747 pâtit du très grave défaut qu'il est nécessaire de posséder pour elle un réservoir de travail spécifique, compte tenu que ledit réservoir aux extrémités de ses parois latérales est équipé au plan interne de logements qui font partie de sa propre structure. Il faut tenir compte du fait qu'il est des milliers de machines à usiner par électroérosion actuellement en fonctionnement dans le monde qui attendent une solution satisfaisante à la question de l'étanchéité du bras inférieur.

Or, la solution du Brevet U.S.A. 4.647.747 contraindrait à la modification structurelle des réservoirs actuellement en service.

La solution proposée dans cette invention part de l'idée de ne modifier en rien la structure de l'un quelconque des réservoirs actuellement connus et de lui incorporer un ajout extérieur qui apporte une solution au problème de l'étanchéité et du mouvement du bras sans apport d'efforts sur ce dernier.

L'ajout ou dispositif objet de cette invention est assemblé extérieurement, par exemple par des vis, à un réservoir actuellement en service, cette opération étant simple et bon marché.

L'invention considère également que si les joints d'étanchéité sont totalement étanches, il est transmis, dans le mouvement, des efforts non désirables sur le bras inférieur, de là qu'elle conçoit un joint semi-étanche entre lame métallique et bras inférieur, en dotant l'ensemble d'un conduit de trop-plein qui collecte le liquide qui s'échappe par les joints d'étanchéité ou de semi-étanchéité.

La présente invention préconise un dispositif d'étanchéité pour le bras inférieur d'une machine à usiner par électroérosion, de celle qui comprennent un réservoir de travail conteneur de fluide en ayant pratiqué dans l'une de ses parois latérales une fenêtre et en disposant d'une feuillard métallique face à ladite fenêtre, en ayant pratiqué un orifice dans le feuillard métallique ce qui permet le passage du bras inférieur de la machine d'électroérosion, en disposant qu'à l'extérieur du réservoir
a) on ajoute au réservoir, de chaque côté de ladite fenêtre, un dispositif d'enroulement dudit feuillard métallique se composant d'un ressort de torsion qui se fixe par une extrémité à un axe et par l'autre à un cylindre à enroulement relié au feuillard métallique et de moyens de manière à faire varier le degré de torsion dudit ressort de torsion ;
b) on encadre la fenêtre par un encadrement structurel relié au réservoir qui comprend un cadre intérieur et un cadre extérieur qui emprisonnent entre l'un et l'autre un encadrement d'étanchéité constitué par deux semi-encadrements se faisant vis-à-vis qui disposent chacun sur ses bords de lèvres-bourrelets en caoutchouc s'appuyant sur le feuillard métallique;
c) un joint de semi-étanchéité disposé autour de l'orifice du feuillard métallique comprenant une bride intérieure qui retient dans un évidement annulaire un anneau de matériau alvéolaire et une contre-bride extérieure qui retient entre lui et un couvercle, un anneau de matériau spongieux;
d) un conduit de trop-plein disposé inférieurement au moins tout au long de la fenêtre du réservoir de travail.

Elle se caractérise également en ce que dans la contre-bride a été pratiqué inférieurement par usinage un orifice ou saignée.

Pour mieux comprendre l'objet de la présente invention, il est représenté sur les plans une forme préférentielle de réalisation pratique, susceptible de changements accessoires qui n'en détournent guère le fondement.

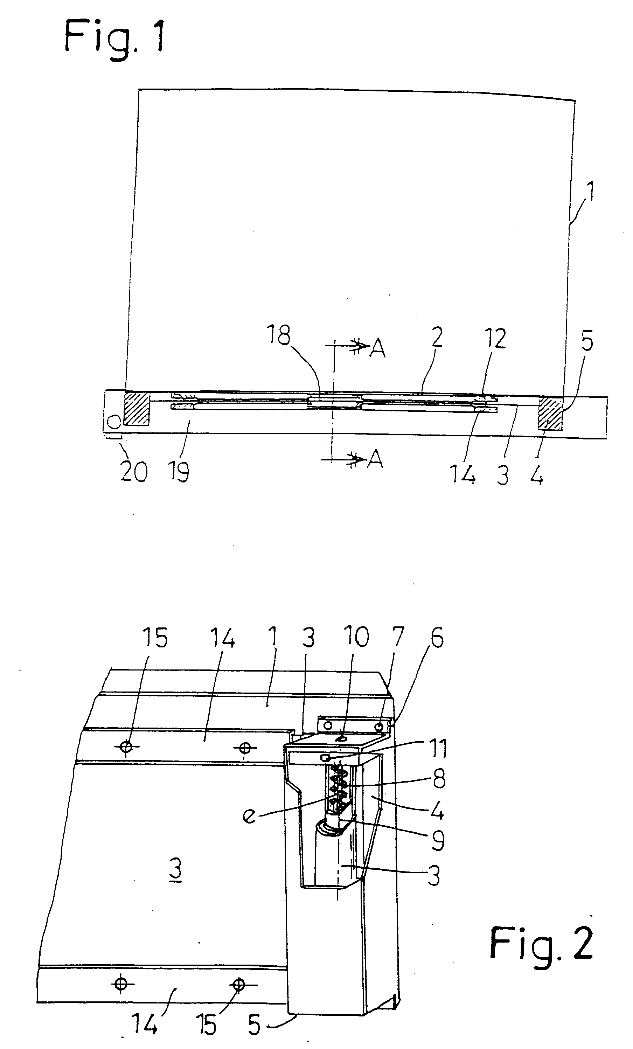

La figure 1 est une vue en coupe en plan d'une réalisation pratique de l'objet de l'invention.

La figure 2 est une perspective d'un côté latéral de la figure 1 avec une fenêtre pour pouvoir observer le mécanisme du ressort.

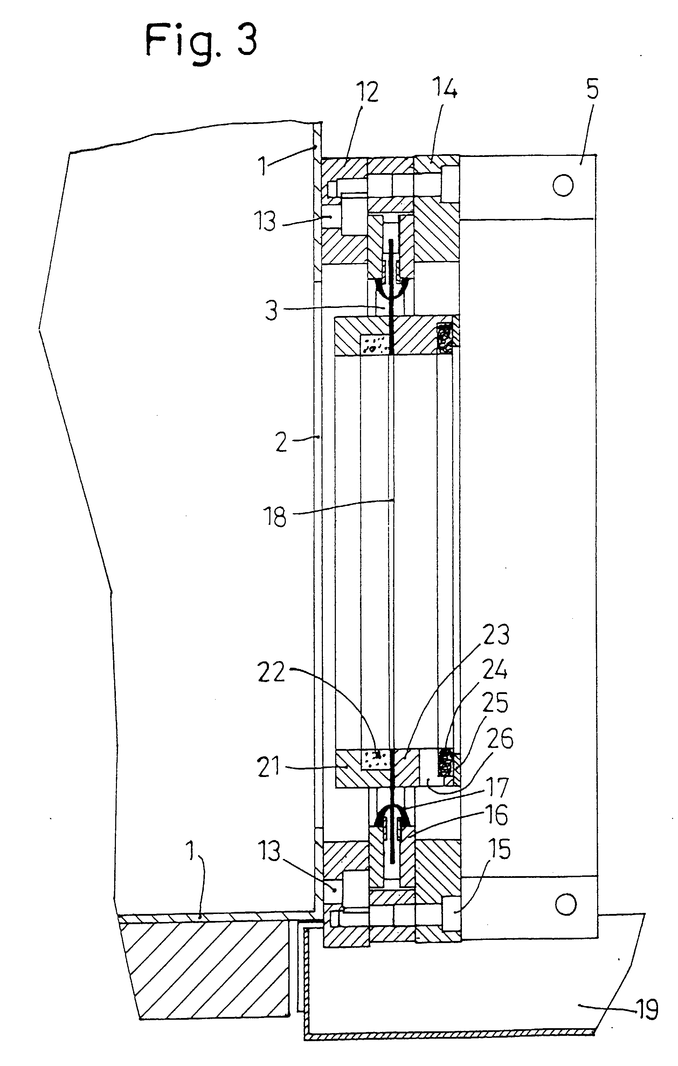

La figure 3 est une vue selon la coupe A:A de la figure 1.

Il est décrit ci-après un exemple de réalisation pratique, non limitative, de la présente invention.

On dispose un réservoir (1) conteneur de fluide pour le travail d'électroérosion, avec la fenêtre (2) pratiquée dans l'une de ses parois latérales qui permet le passage et mouvement du bras porteur de la poupée inférieure de la machine à usiner par électroérosion, tout ceci de manière déjà connue.

Sans introduire de modifications dans le réservoir (1) on lui ajoute extérieurement le dispositif objet de l'invention.

On dispose un feuillard (3) d'acier inoxydable flexible et enroulable, chacune de ses extrémités latérales étant reliées à un dispositif (4) d'enroulement disposé à l'intérieur d'un cassetin protecteur (5) prismatique qui, au moyen de ses ailes (6) est relié au réservoir (1), par exemple au moyen de vis (7).

Le dispositif d'enroulement (4) comprend un axe (e) sur lesquels se fixe l'extrémité d'un ressort de torsion (8) qui fixe son autre extrémité à un cylindre d'enroulement (9) auquel s'assemble le bord latéral du feuillard (3).

La tête (10) de l'axe (e) du dispositif d'enroulement (4) est accessible depuis l'extérieur de manière à la doter d'un pré-charge déterminée au ressort de torsion (8) ou que l'on puisse la faire varier à volonté, en disposant de la vis correspondante d'étalonnement (11) afin de maintenir ledit axe dans la position désirée.

Autour de la fenêtre (2) et par l'extérieur du réservoir (1) se crée un encadrement structurel qui se constitue en un cadre intérieur (12) relié au réservoir (1) au moyen de vis (13) et en un cadre extérieur (14), lequel est assemblé au cadre intérieur (12) au moyen de vis (15).

Emprisonné entre le cadre intérieur (12) et le cadre extérieur (14) est disposé un cadre d'étanchéité constitué par deux semi-cadres (16) qui se terminent en lèvres-bourrelets (17) en caoutchouc qui s'appuient sur le feuillard (3) en donnant lieu à une étanchéité dont il n'est pas nécessaire que ce soit une étanchéité totale, et ce, afin que la bride (3) puisse glisser facilement entre lesdits bourrelets (17) ce qui favorise un mouvement sans tensions excessives et préjudiciables du bras inférieur de la machine qui pénètre par un orifice (18) dans le feuillard (3).

L'étanchéité entre la bande (3) et le bras inférieur de la machine est obtenu par un joint semi-étanche lequel permet la sortie partielle de liquide vers un conduit de collecte (19) avec sa goulotte de trop-plein (20) pour son recyclage.

Ladite semi-étanchéité permet un léger glissement du bras inférieur dans l'orifice (18) en évitant des efforts superflus et préjudiciables sur ledit bras.

Le joint semi-étanche se compose par le côté intérieur du feuillard métallique (3) d'une bride de métal (21) comportant un évidement annulaire pour contenir un anneau (22) de polyuréthane alvéolaire et se compose du côté extérieur d'une contre-bride (23) ayant un évidement annulaire frontal qui contient un anneau (24) de matériel spongieux retenu par un couvercle (25).

Dans la partie inférieure de la contre-bride (23) a été pratiqué un orifice- saignée (26) qui permet le trop-plein du joint semi-étanche vers le canal de collecte (19).

## Revendications

1. Dispositif d'étanchéité pour bras inférieur d'une machine à usiner par électroérosion, de celles comprenant un réservoir de travail conteneur de fluide en ayant pratiqué dans l'une de ses parois latérales une fenêtre et en disposant d'un feuillard métallique face à ladite fenêtre, en ayant pratiqué un orifice dans le feuillard métallique qui permet le passage du bras inférieur de la machine à usiner par électroérosion, en comprenant à l'extérieur du réservoir
a) ajouté au réservoir, de chaque côté de ladite fenêtre, un dispositif d'enroulement dudit feuillard métallique qui se compose d'un ressort de torsion qui se fixe par une extrémité à un axe et par l'autre à un cylindre d'enroulement relié au feuillard métallique et de moyens pour faire varier le degré de torsion dudit ressort de torsion;
b) un encadrement structurel relié au réservoir et encadrant la fenêtre de la paroi latérale du réservoir et qui se compose d'un cadre intérieur et d'un cadre extérieur qui emprisonnent entre l'un et l'autre un cadre d'étanchéité constitué par deux semi-cadres se faisant vis-à-vis et disposant chacun sur ses bords d'un bourrelet en caoutchouc qui s'appuie sur le feuillard métallique;
c) un joint de semi-étanchéité disposée autour de l'orifice du feuillard métallique qui comporte une bride intérieure qui retient dans un évidement annulaire un anneau de matériau alvéolaire et une contre-bride extérieure qui retient entre le premier et un couvercle un anneau de matériau spongieux;
d) un conduit de trop-plein disposé inférieurement au moins tout au long de la fenêtre du réservoir de travail.

2. Dispositif d'étanchéité pour bras inférieur d'une machine à usiner par électroérosion, selon revendication antérieure, se caractérisant en ce que dans la contre-bride on a pratiqué inférieurement un orifice-saignée.
